# FASCICULE DE BREVET EUROPEEN

(11) **EP 2 718 635 B1**
(45) Date de publication et mention de la délivrance du brevet: **13.05.2015**
(21) Numéro de dépôt: 12731095.1
(22) Date de dépôt: 31.05.2012
(51) Int. Cl.: F24J 2/04, F24J 2/52, F24J 2/46, H01L 31/042, E04D 13/18, E04D 3/36, E04D 3/06

(54) **SYSTEME DE FIXATION ET D'ETANCHEITE POUR LA REALISATION D'UNE TOITURE SOLAIRE, ET TOITURE SOLAIRE OBTENUE**
BEFESTIGUNGS- UND DICHTUNGSSYSTEM ZUR ERZEUGUNG EINES SOLARDACHES UND DAMIT ERZEUGTES SOLARDACH
ATTACHMENT AND SEALING SYSTEM FOR CREATING A SOLAR ROOF, AND SOLAR ROOF OBTAINED

(30) Priorité: 07.06.2011 FR 1154953
(43) Date de publication de la demande: 16.04.2014
(73) Titulaire: Saint-Gobain Glass France, 92400 Courbevoie (FR)
(72) Inventeur: DOUCHE, Jean-Pierre, F-60150 Le Plessis Brion (FR); ABICHOU, Mohamed, F-94130 Nogent Sur Marne (FR)
(74) Mandataire: Galdeano, Sophie Marie
(86) Numéro de dépôt international: PCT/FR2012/051220
(87) Numéro de publication internationale: WO 2012/168627

(56) Documents cités:
- EP-A1- 2 023 402
- EP-A2- 1 734 588
- DE-U1- 20 209 892
- FR-A1- 2 401 290
- FR-A1- 2 943 369
- JP-A- 6 136 895
- JP-A- 2000 064 515
- JP-A- 2000 096 793

## Description

L'invention concerne un système de fixation et d'étanchéité, pour le montage d'une toiture solaire, ainsi que la toiture solaire ainsi montée et fixée, la toiture solaire comportant des dispositifs aptes à capter l'énergie solaire pour fournir de l'énergie électrique et thermique, tels que des cellules photovoltaïques générant de l'électricité et respectivement des capteurs solaires utilisés pour une production d'eau chaude et d'air chaud.

Depuis quelques années, pour des raisons économiques, un intérêt certain quant à l'usage de l'énergie solaire s'est développé pour assurer en partie les besoins de consommation en électricité et/ou eau chaude des habitations ou locaux commerciaux.

Pour fournir des besoins en électricité, il est connu de disposer sur les toitures des modules photovoltaïques comprenant des cellules photovoltaïques couplées en série les unes aux autres et générant un courant continu lorsqu'elles sont exposées à la lumière.

Un module photovoltaïque est généralement formé d'un panneau photovoltaïque intégrant les cellules photovoltaïques, et d'un cadre métallique entourant et portant le panneau, ce cadre intégrant par ailleurs les câbles pour la distribution électrique. Le panneau photovoltaïque est conçu au moins sur sa face avant en regard de l'environnement extérieur, avec un substrat verrier. A titre d'exemple, le panneau comprend un substrat verrier constituant donc sa face avant, un substrat plastique (film plastique) ou un substrat verrier constituant sa face arrière ; entre les substrats de face avant et face arrière sont insérés un ou plusieurs intercalaires polymères, et un élément photovoltaïque (empilement de matériaux semiconducteurs) pris entre deux électrodes métalliques. Les matériaux semiconducteurs sont par exemple à base de silicium cristallin ou de couches minces.

Pour les besoins spécifiques en eau chaude (utilisation sanitaire et éventuellement chauffage au sol ou mural), il est également connu de doter les toits de capteurs solaires. Ces capteurs se présentent notamment sous forme de modules, comprenant une couverture transparente, tel qu'un substrat verrier, et un absorbeur. L'absorbeur est un élément dans lequel circule un fluide caloporteur, tel que simplement de l'eau à réchauffer. La couverture transparente laisse passer le rayonnement solaire jusqu'à l'absorbeur pour chauffer le fluide y circulant, et confine avantageusement le rayonnement infrarouge, minimisant ainsi le refroidissement de l'absorbeur. En outre, afin d'éviter les déperditions thermiques de l'absorbeur, une isolation thermique est agencée à l'arrière et sur la périphérie du module.

Par ailleurs, on connaît d'autres systèmes utilisant la ressource énergétique solaire tels que des modules thermiques fournissant de l'air chaud. A cet effet, la demande de brevet américain US 2006/0118163 propose non seulement de disposer des modules photovoltaïques sur un toit, mais également des modules thermiques à air chaud. Ces modules ou capteurs thermiques à air chaud comportent des substrats laissant passer l'énergie solaire, et un espace où de l'air est confiné pour être réchauffé grâce à ladite énergie. Des conduits de distribution sont connectés à ces modules pour capter l'air chaud, et assurer l'alimentation en air à réchauffer dans l'espace de confinement.

Aussi est-il sérieusement envisagé pour l'avenir, pour des économies d'énergie et un respect de l'environnement, d'utiliser l'énergie solaire en agençant, en combinaison sur les toits, des modules photovoltaïques et des capteurs solaires thermiques à air chaud et à eau chaude. Une telle toiture solaire constitue un toit « thermorégulateur » permettant en hiver de capter un maximum d'énergie, et en été d'utiliser au mieux l'énergie tout en régulant l'absorption de chaleur.

Actuellement la plupart des modules, cellules photovoltaïques et capteurs thermiques, comprennent des cadres métalliques qui forment des supports pour l'ensemble des éléments constituant les cellules et les capteurs. Ces cadres offrent en outre l'avantage de pouvoir rapporter et fixer aisément ces modules sur la toiture. Toutefois, ces cadres présentent certains inconvénients tels qu'un coût supplémentaire à la fabrication, la nécessité de leur mise à la terre une fois montés sur la toiture, un ajout de poids à la toiture, un caractère inesthétique.

C'est pourquoi, les fabricants de modules proposent depuis récemment des modules sans cadre, accompagnés de systèmes adaptés de fixation à la toiture.

Il est rappelé qu'une toiture est composée d'une charpente, généralement en bois, d'une couverture, généralement en tuiles ou en ardoises, d'un faîtage et de rives généralement constitués du même matériau que la couverture. La charpente comprend communément, deux fermes à chaque extrémité latérale de la toiture et reposant sur les murs porteurs de la construction, les sablières aux extrémités inférieures de ladite charpente et posées sur les murs de la construction, les pannes reliant les fermes et fixées sur celles-ci, la faîtière reliant et posée sur chaque extrémité supérieure des fermes, des chevrons fixés sur et transversalement aux pannes et agencés selon la pente de la toiture, et des liteaux fixés sur les chevrons parallèlement aux pannes et sur lesquels est disposée la couverture.

Une solution de fixation de modules photovoltaïques sans cadre sur une toiture est par exemple proposée par la société CONERGY sous le nom « Solar Roof III ». La couverture est constituée d'une pluralité de substrats verriers, de forme carrée ou rectangulaire, formant les modules photovoltaïques.

Cette solution consiste en des rails métalliques et en un système de fixation coopérant avec les rails, pour réunir des substrats adjacents latéraux et des substrats inférieurs et supérieurs. Dans la suite de la description, le qualificatif « adjacents latéraux » pour des substrats verriers formant la couverture d'une toiture, est relatif à des substrats agencés côte à côte selon une direction transversale à la pente de la toiture ; et on entend par « supérieur » et « inférieur » les qualificatifs d'éléments positionnés vers le haut et respectivement vers le bas selon la pente de la toiture.

Selon cette solution, les rails sont agencés et fixés sur les liteaux de la charpente. Ils sont espacés d'une distance correspondant à la largeur d'un module. Chaque rail présente une surface de support pourvue d'éléments en caoutchouc pour recevoir par application les faces des extrémités latérales de deux substrats verriers adjacents latéraux. Les éléments en caoutchouc constituent également des joints d'étanchéité pour les parties latérales des substrats.

Le système de fixation comporte des attaches de sécurité constituées pour chacune, d'une plaquette et d'une vis de fixation, la plaquette étant destinée à être à cheval sur deux modules adjacents latéraux, tandis que la vis de fixation est destinée à traverser la plaquette, s'insérer au niveau de la jointure entre les deux modules et coopérer avec un logement médian fileté du rail. Le serrage de la vis dans le logement fileté engendre la compression de la plaquette contre les deux modules garantissant un ferme maintien des modules contre le rail.

En ce qui concerne deux substrats adjacents supérieur et inférieur, c'est-à-dire disposés l'un au dessus de l'autre dans le sens de la pente de la toiture, l'extrémité inférieure du substrat supérieur vient en recouvrement de l'extrémité supérieure du substrat inférieur via des crochets en forme de S s'agrippant selon l'épaisseur des substrats. Une étanchéité à la jonction de deux substrats supérieur et inférieur est réalisée au moyen d'un joint fixé sur la tranche de l'extrémité supérieure du substrat inférieur et comprimé par l'extrémité inférieure du substrat supérieur.

Il est également connu un système de fixation et d'étanchéité pour toiture solaire comprenant une pluralité de profilés et des pièces de fixation. Chaque profilé comprend une âme, deux surfaces de support en saillie de l'âme et disposées au niveau des extrémités latérales de l'âme, deux ailes latérales connectées à l'âme et agencées respectivement de part et d'autre des surfaces de support, chaque aile comportant un face d'appui et une paroi latérale, la paroi latérale étant perpendiculaire à la face d'appui et à l'opposé de l'âme, les faces d'appui des ailes étant agencées dans le plan de l'âme de manière à former avec l'âme une surface plane, et la paroi latérale de chacune des ailes présentant, à son extrémité distale opposée à la face d'appui, un retour présentant une première partie connectée à la paroi latérale et s'étendant parallèlement à la face d'appui en direction de l'âme, et une seconde partie connectée à la première partie et s'étendant perpendiculairement à celle-ci en étant dirigée vers la face d'appui. Chaque pièce de fixation comprend une platine destinée à être solidarisée dans la partie médiane d'un profilé en regard de l'âme, au moins une bride de liaison et des moyens de solidarisation servant à la solidarisation de la platine avec le profilé, une plaquette de maintien destinée à coopérer avec la platine, un jeu étant établi entre la platine et la plaquette et adapté à loger les tranches des substrats verriers de la toiture qui sont destinés à être maintenus fixés contre les profilés, et des moyens de fixation coopérant avec la plaquette pour verrouiller en place la pièce de fixation.

Un autre système de fixation et d'étanchéité pour toiture solaire est connu du document FR-2 943 369-A.

Pour faciliter le maniement des modules par les installateurs de toiture solaire, la tendance est à la diminution de l'épaisseur des substrats verriers de façon à diminuer le poids des modules. Toutefois, cela conduit à une diminution de la rigidité des modules, en particulier lorsqu'ils sont dépourvus de cadre. Or, la toiture doit résister à des charges potentiellement importantes telles qu'un chargement de neige (charge de 5400 Pa) ou des charges de vent (dépression de 2400 Pa).

Il y a donc un besoin pour un système de fixation pour toiture solaire qui soit plus solide et plus rigide.

Pour cela, l'invention propose un système de fixation et d'étanchéité pour une toiture solaire comprenant des substrats verriers, le système de fixation et d'étanchéité comprenant :
- une pluralité de profilés longitudinaux destinés à être positionnés parallèlement les uns aux autres, chaque profilé longitudinal comprenant une gorge centrale et deux gorges latérales,
- des barres transversales perpendiculaires à la pluralité de profilés longitudinaux, chaque barre transversale étant fixée à deux profilés longitudinaux adjacents et chaque barre transversale comprenant une surface en escalier avec un palier inférieur et un palier supérieur, le palier inférieur étant destiné à supporter un substrat verrier inférieur et le palier supérieur étant destiné à supporter un substrat verrier supérieur, le substrat verrier supérieur étant destiné à chevaucher le substrat verrier inférieur,
- des pièces de fixation en coin destinées à coopérer avec la gorge centrale des profilés longitudinaux, chaque pièce de fixation en coin étant destinée à maintenir les coins de deux substrats verriers latéraux adjacents sur un même profilé longitudinal et à les fixer simultanément.

Selon une autre particularité, la gorge centrale de chaque profilé longitudinal comprend deux surfaces se faisant face, chacune de ces surfaces comportant une nervure en saillie de la surface, les nervures étant dans un même plan, parallèle au fond des gorges centrale et latérales, et dans lequel chaque pièce de fixation en coin comprend un étrier adapté à prendre en sandwich les tranches de deux substrats verriers latéraux adjacents, l'étrier étant destiné à être fixé dans la gorge centrale d'un profilé longitudinal au moyen de premiers moyens de fixation traversant l'étrier et destinés à se fixer dans un organe de maintien à distance, l'organe de maintien à distance étant adapté à coopérer avec des deuxièmes moyens de fixation traversant un lardon taraudé, disposée dans la gorge centrale entre le fond de la gorge centrale et les nervures, et une cale supérieure, les nervures étant destinées à être prises en sandwich entre le lardon taraudé et la cale supérieure lors de la fixation des deuxièmes moyens de fixation dans l'organe de maintien à distance.

Selon une autre particularité, l'étrier a une section en forme de C avec une surface supérieure et une surface inférieure reliées par un fond et permettant de retenir les substrats verriers dans la pente d'une charpente, la surface supérieure de l'étrier étant profilée pour couvrir le moins de surface possible des substrats verriers.

Selon une autre particularité, l'étrier comprend en outre une patte destinée à être introduite dans la gorge centrale jusque sous les nervures de façon à empêcher la rotation de l'étrier lors de sa fixation sur l'organe de maintien à distance au moyen des premiers moyens de fixation.

Selon une autre particularité, le système de fixation et d'étanchéité comprend en outre des joints longitudinaux destinés à être fixés sur les surfaces de support des profilés longitudinaux.

Selon une autre particularité, le système de fixation et d'étanchéité comprend en outre des joints transversaux, chaque joint transversal comprenant une partie en forme de C de hauteur égale à la différence de hauteur entre les paliers inférieur et supérieur de chaque barre transversale de façon à ce que la partie en forme de C puisse s'intercaler entre le palier inférieur d'une barre transversale et un premier substrat verrier, et la partie en forme de C étant destinée à accueillir un deuxième substrat verrier de façon à ce qu'il y ait un recouvrement des premier et deuxième substrats verriers.

Selon une autre particularité, chaque joint transversal comprend en outre un prolongement destiné à être disposé sur le palier supérieur d'une barre transversale de façon à s'intercaler entre le palier supérieur de la barre transversale et le premier substrat verrier.

Selon une autre particularité, le système de fixation et d'étanchéité comprend en outre des crochets de maintien d'un substrat verrier dans la pente d'une charpente, chaque crochet étant destiné à s'introduire dans une fente pratiquée dans le palier supérieur de chaque barre transversale.

Selon une autre particularité, le système de fixation et d'étanchéité comprend en outre des crochets de maintien d'un substrat verrier dans la pente d'une charpente, chaque crochet étant destiné à s'introduire dans une fente pratiquée dans le palier supérieur de chaque barre transversale et dans le prolongement de chaque joint transversal.

Selon une autre particularité, le système de fixation et d'étanchéité comprend en outre des baguettes longitudinales de protection destinées à être fixées le long des profilés longitudinaux au moyen de pièces de fixation longitudinale destinées à coopérer avec la gorge centrale des profilés longitudinaux, chaque pièce de fixation longitudinale étant destinée à fixer simultanément les bords de deux substrats verriers latéraux adjacents entre un profilé longitudinal (5) et une baguette longitudinale de protection.

Selon une autre particularité, chaque pièce de fixation longitudinale comprend des premiers moyens de fixation traversant une baguette longitudinale de protection et destinés à se fixer dans un organe de maintien à distance, l'organe de maintien à distance étant adapté à coopérer avec des deuxièmes moyens de fixation traversant un lardon taraudé, disposée dans la gorge centrale entre le fond de la gorge centrale et les nervures, et une cale supérieure, les nervures étant destinées à être prises en sandwich entre le lardon taraudé et la cale supérieure lors de la fixation des deuxièmes moyens de fixation dans l'organe de maintien à distance.

Selon une autre particularité, les profilés longitudinaux sont en acier, de préférence en acier galvanisé.

Selon une autre particularité, le système de fixation et d'étanchéité comprend en outre une membrane de protection destinée à être tendue entre deux profilés longitudinaux adjacents au moyen d'organes d'encliquetage, chaque organe d'encliquetage étant destiné à être encliqueté sur une extrémité libre d'une gorge latérale d'un profilé longitudinal.

Selon une autre particularité, le système de fixation et d'étanchéité comprend en outre un chariot muni de roulettes coulissant dans les gorges latérales de deux profilés longitudinaux adjacents, le chariot étant destiné à supporter des substrats verriers à poser sur des profilés longitudinaux.

L'invention concerne également une toiture solaire comportant des substrats en verre constituant des éléments de couverture de la toiture et au moins en partie des capteurs de l'énergie solaire, une charpente comprenant une sablière, une faîtière et des panes, et un système de fixation et d'étanchéité décrit cidessus, les substrats en verre étant posés sur les profilés longitudinaux et maintenus fermement grâce aux pièces de fixation en coin et les profilés longitudinaux étant fixés transversalement, et de préférence directement, à la charpente.

Selon une autre particularité, les substrats en verre sont dépourvus de cadre support.

D'autres caractéristiques et avantages de l'invention vont à présent être décrits en regard des dessins sur lesquels :
- La figure 1 représente une vue en perspective d'une toiture selon l'invention, en cours de réalisation ;
- La figure 2 est une vue en perspective du profilé selon l'invention ;
- La figure 3 est une vue en coupe transversale du système de fixation et d'étanchéité auquel sont associés des substrats verriers, montrant le chevauchement de substrats verriers inférieurs et supérieurs ;
- La figure 4 est une vue en perspective d'un étrier d'une pièce de fixation en coin du système de fixation et d'étanchéité ;
- La figure 5 est vue en coupe longitudinale d'une pièce de fixation en coin du système de fixation et d'étanchéité à laquelle sont associés des substrats verriers ;
- La figure 6 est vue en coupe longitudinale du système de fixation et d'étanchéité auquel sont associés des substrats verriers, montrant le chevauchement de substrats verriers inférieurs et supérieurs entre deux profilés ;
- La figure 7 est une vue en coupe transversale du système de fixation et d'étanchéité auquel sont associés des substrats verriers, entre deux système de fixation en coin ;
- La figure 8 est une en coupe transversale du système de fixation et d'étanchéité muni d'une membrane de protection ;
- Les figures 9a et 9b sont des vues en coupe de deux modes de réalisation de l'organe d'encliquetage pour fixer la membrane de protection ;
- La figure 10 est une en coupe transversale du système de fixation et d'étanchéité en bord de toiture.

Le mot « longitudinal » signifie dans la présente demande « le long des profilés ». Le mot « transversal » signifie dans la présente demande « transversalement aux profilés ».

Dans la présente invention, « substrat inférieur » désigne un substrat dans la pente qui est chevauché par un « substrat supérieur », situé plus haut dans la pente par rapport au substrat inférieur. Des substrats supérieur et inférieur sont disposés l'un au dessus de l'autre dans le sens de la pente de la toiture, l'extrémité inférieure du substrat supérieur venant en recouvrement de l'extrémité supérieure du substrat inférieur.

L'invention se rapporte à un système de fixation et d'étanchéité pour une toiture solaire comprenant des substrats verriers. Le système de fixation et d'étanchéité comprend une pluralité de profilés longitudinaux destinés à être positionnés parallèlement les uns aux autres. Chaque profilé longitudinal comprend une gorge centrale et deux gorges latérales.

Le système de fixation et d'étanchéité comprend également des barres transversales perpendiculaires à la pluralité de profilés. Chaque barre transversale est fixée à deux profilés adjacents et chaque barre transversale comprend une surface en escalier avec un palier inférieur et un palier supérieur. Le palier inférieur est destiné à supporter un substrat verrier inférieur et le palier supérieur est destiné à supporter un substrat verrier supérieur. Le substrat verrier supérieur est destiné à chevaucher le substrat verrier inférieur. Ainsi, les quatre bords d'un substrat verrier reposent sur un support, soit sur un profilé longitudinal, soit sur une barre transversale, ce qui donne plus de solidité et de rigidité à la toiture.

Le système de fixation et d'étanchéité comprend également des pièces de fixation en coin destinées à coopérer avec la gorge centrale des profilés longitudinaux. Chaque pièce de fixation en coin est destinée à maintenir et à fixer simultanément les coins de deux substrats verriers latéraux adjacents sur un même profilé longitudinal. Ainsi, les pièces de fixation en coin facilitent la pose des substrats verriers qui peuvent être maintenus en place avant leur fixation.

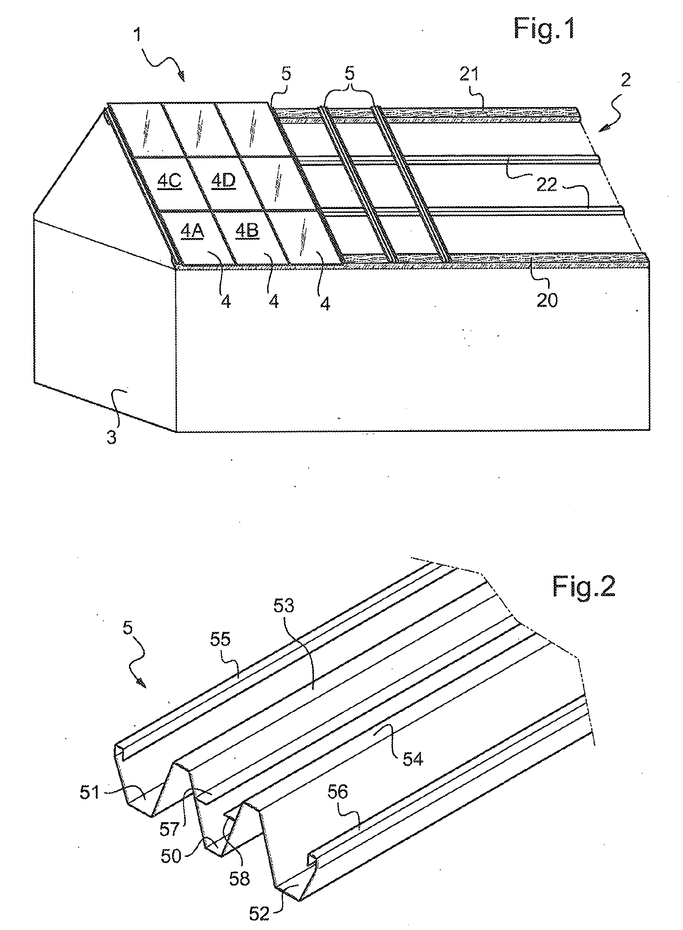

La figure 1 représente une toiture solaire 1 montée sur une construction 3. La toiture comporte une charpente 2 et des substrats verriers 4 faisant office de couverture et ayant pour au moins une partie de la toiture la fonction de capteurs d'énergie solaire équipant des dispositifs photovoltaïques et des capteurs thermiques produisant de l'air chaud et/ou de l'eau chaude.

La charpente 2 comporte selon l'une des pentes de la toiture, une sablière 20, un faîtage 21 et des pannes 22. Contrairement à une toiture classique, la charpente n'a pas besoin de recevoir de chevrons et de liteaux, ce qui simplifie la réalisation de la toiture de l'invention. Bien entendu, en cas de rénovation sur une charpente usuelle déjà existante, les profilés peuvent être fixés sur les chevrons.

La couverture de la toiture est formée par l'association d'une pluralité de substrats verriers 4 plans, donnant un aspect de surface unitaire et continue. Ces substrats sont dépourvus de cadre métallique et sont fixés à la charpente grâce à un système de fixation et d'étanchéité. Le système de fixation et d'étanchéité comprend une pluralité de profilés longitudinaux 5, disposés parallèlement les uns aux autres. Un profilé longitudinal 5 permet d'assembler des substrats adjacents latéraux, par exemple tel qu'illustré sur la figure 1, les substrats latéraux 4A et 4B, et les substrats 4C et 4D et des substrats selon toute une longueur de pente de la sablière jusqu'à la faîtière, chaque substrat supérieur, tel que 4C ou 4D, chevauchant un substrat inférieur, tel que 4A ou respectivement 4B.

Les substrats verriers 4 des dispositifs photovoltaïques, du capteur à eau et à air, ou de simple couverture verrière sont formés de verre monolithique trempé ou de verre feuilleté. Ils peuvent en variante être en double vitrage hormis pour les dispositifs photovoltaïques.

Les substrats verriers 4 comportent avantageusement des couches fonctionnelles, telles qu'un revêtement antireflet pour minimiser les pertes en réflexion et/ou maximiser la pénétration du rayonnement solaire. Pour une application relative au capteur à air chaud, le revêtement antireflet est de préférence disposé sur les deux faces opposées des substrats.

De même, un revêtement bas-émissif peut être prévu pour éviter les déperditions thermiques en réfléchissant les infrarouges ayant traversé les substrats, et de les confiner sous la toiture. Le revêtement bas-émissif en étant disposé sur la face opposée à celle en regard de l'environnement extérieur peut remplacer un revêtement antireflet.

Les profilés longitudinaux 5 remplacent les chevrons usuels et s'étendent depuis le faîtage 21 jusqu'à la sablière 20 auxquels ils sont fixés ainsi qu'aux pannes 22.

Le système de fixation et d'étanchéité assure une excellente assise de la couverture, réalise une étanchéité à l'eau et à l'air de celle-ci, et permet d'élaborer une couverture de toiture à aspect unitaire.

L'étanchéité à l'air est primordiale pour ce type de toiture solaire intégrant des capteurs thermiques de production d'air chaud. En effet, la production d'air chaud se faisant par convection forcée, l'air doit être amené et dirigé dans des zones spécifiques, ce qui ne serait pas réalisable, ou du moins serait fortement dégradé, si la toiture n'était pas étanche à l'air au niveau des jonctions entre substrats.

La figure 2 représente une vue en perspective d'un profilé longitudinal 5. Ce profilé longitudinal 5 est en acier, de préférence galvanisé pour une bonne tenue à la corrosion. Il est réalisé préférentiellement par une technique de profilage à partir d'un feuillard. Les profilés longitudinaux étant en acier, ils ont un coefficient de dilatation thermique proche de celui du verre, ce qui permet une meilleure durée de vie de la toiture solaire. De plus, ils sont bien plus solides que s'ils étaient en aluminium.

Chaque profilé longitudinal 5 comprend une gorge centrale 50 et deux gorges latérales 51 et 52 situées de part et d'autre de la gorge centrale 50. Les gorges latérales 51 et 52 sont reliées à la gorge centrale 50 par deux surfaces de support 53 et 54 sur lesquelles sont destinés à s'appuyer les substrats verriers 4. La gorge centrale 50 comprend deux surfaces se faisant face, reliées par un fond. Chacune de ces surfaces se faisant face comporte une nervure 57, 58 en saillie de la surface. Les nervures 57, 58 sont dans un même plan, parallèle au fond des gorges centrale 50 et latérales 51, 52 et aux surfaces de support 53, 54.

Les gorges latérales 51 et 52 présentent des extrémités libres respectives 55 et 56 formant des surfaces de support sur lesquelles sont destinées à s'appuyer et à être fixées des barres transversales 6 et sur lesquelles sont destinées à être maintenues des membranes de protection 12. Les extrémités libres 55, 56 présentent une première partie s'étendant vers l'intérieur du profilé parallèlement aux surfaces de support 53, 54, la première partie étant prolongée par une deuxième partie en direction du fond de la gorge latérale, la deuxième partie étant perpendiculaire à la première partie. La forme de ces extrémités libres 55, 56 renforce la rigidité mécanique de l'ensemble du profilé.

Les profilés longitudinaux 5 peuvent être aboutés deux à deux afin de couvrir toute la distance entre la sablière et la faîtière. Deux profilés longitudinaux 5 sont aboutés par recouvrement de leurs extrémités et assemblés par exemple par vissage des deux extrémités qui se recouvrent.

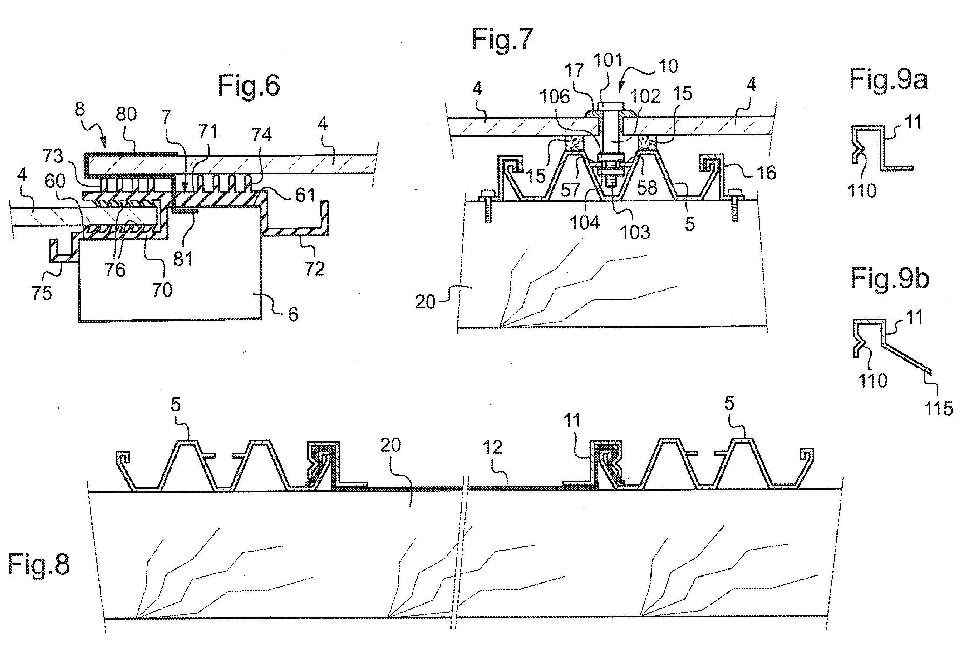

La fixation des profilés longitudinaux 5 aux panes 22, faîtière 21 et sablière 20 de la charpente est réalisée de préférence au moyen de pièces de type équerres (16, sur la figure 7) rapportées par dessus les extrémités libres 55, 56 des profilés longitudinaux 5 et fixées par soudage ou vissage à la charpente. Les équerres présentent l'avantage de renforcer la fixation en cas d'efforts particuliers dus à des charges rapportées.

Les profilés longitudinaux 5 permettent de supporter les substrats verriers 4 et font partie du système de fixation et d'étanchéité qui assure la fixation des substrats une fois posés sur lesdits profilés, ainsi que l'étanchéité à l'eau et à l'air de la couverture. Les gorges centrale et latérales peuvent servir à l'étanchéité à l'eau en évacuant l'eau par ruissellement gravitaire.

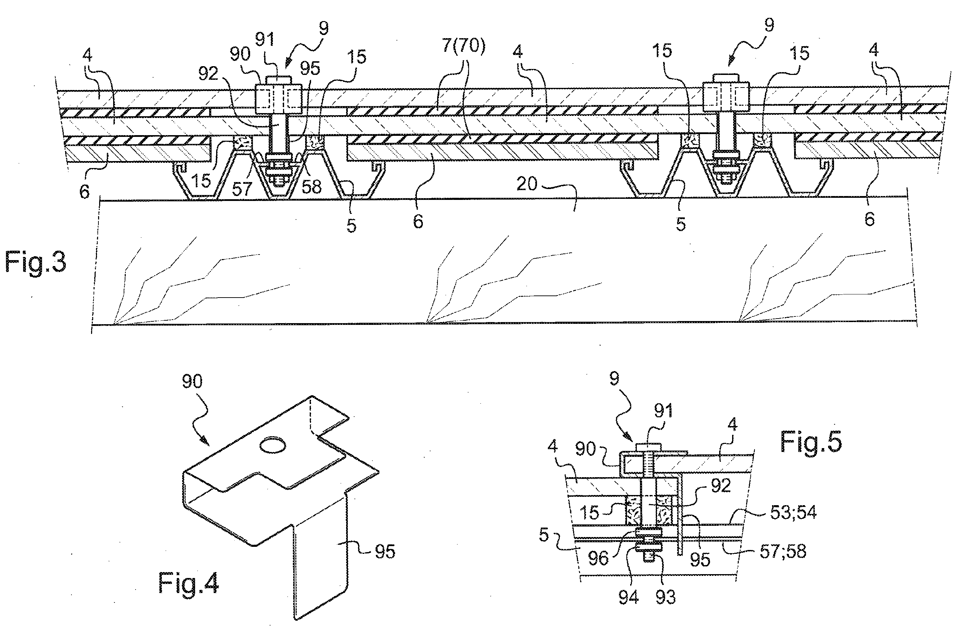

La figure 3 est une vue en coupe transversale du système de fixation et d'étanchéité auquel sont associés des substrats verriers, montrant le chevauchement de substrats verriers inférieurs et supérieurs.

Le système de fixation et d'étanchéité comprend, sur chacun des supports 53, 54 des profilés longitudinaux 5, un joint longitudinal 15. Les joints longitudinaux 15 ont de préférence une section carrée ou rectangulaire. Ils sont continus et s'étendent selon toute la longueur du profilé longitudinal 5. Les substrats verriers 4 reposent directement sur les joints longitudinaux 15, assurant l'étanchéité à l'eau de la toiture entre les substrats latéraux adjacents. Les joints longitudinaux sont de préférence en mousse de polyuréthane à cellules fermées avec de bonnes caractéristiques de déformation rémanente après compression (DRC-« compression Set » en anglais) pour assurer à la fois une élasticité et un écrasement appropriés de façon à absorber les variations d'écartement entre le profilé de hauteur fixe et sur lequel repose les substrats, et les substrats qui, selon la pente de la toiture, se chevauchent régulièrement. La variation de la compression du joint longitudinal 15 dans un rapport de 10% à 80% permet d'absorber la variation de pente liée au recouvrement des substrats verriers supérieur et inférieur tout en garantissant un contact continu.

Le système de fixation et d'étanchéité comprend également des barres transversales 6 disposées perpendiculairement à la pluralité de profilés longitudinaux 5. Chaque barre transversale 6 est fixée à deux profilés longitudinaux 5 adjacents, chaque extrémité d'une barre transversale 6 étant fixée, par exemple par vissage, sur une extrémité libre 55, 56 d'un,profilé longitudinal 5. Chaque barre transversale 6 étant et chaque barre transversale 6 comprend une surface en escalier avec un palier inférieur 60 et un palier supérieur 61. Le palier inférieur 60 est destiné à supporter un substrat verrier inférieur et le palier supérieur 61 est destiné à supporter un substrat verrier supérieur. Le substrat verrier supérieur est destiné à chevaucher le substrat verrier inférieur pour participer à l'étanchéité de la toiture.

Le système de fixation et d'étanchéité comprend également des pièces 9 de fixation en coin destinées à maintenir les coins de deux substrats verriers latéraux adjacents sur un même profilé longitudinal 5 pendant la pose pour éviter que les substrats ne glissent le long de la pente. Les pièces 9 de fixation en coin permettent également de fixer, simultanément et en une seule action de vissage, deux substrats verriers latéraux adjacents sur un même profilé longitudinal 5. Les pièces 9 de fixation en coin sont destinées à coopérer avec la gorge centrale 50 des profilés longitudinaux 5.

Les figures 4 et 5 montrent plus en détail les pièces 9 de fixation en coin. Chaque pièce 9 de fixation en coin comprend un étrier 90, un organe de maintien à distance 92, un lardon taraudé 94 non pivotant, une cale supérieure 96 et des premiers et deuxièmes moyens de fixation 91, 93.

L'étrier est adapté à prendre en sandwich les tranches de deux substrats verriers 4 latéraux adjacents. L'étrier 90 a une section en forme de C avec une surface supérieure et une surface inférieure reliées par un fond. Les surfaces supérieures et inférieures sont chacune percées d'un orifice permettant le passage des premiers moyens de fixation 91 pour une fixation de l'étrier 90 dans l'organe de maintien à distance 92 au moyen des premiers moyens de fixation 91. L'étrier 90 permet de retenir deux substrats verriers latéraux adjacents dans la pente d'une charpente, les coins des dits deux substrats verriers latéraux adjacents étant chacun entre la surface supérieure et la surface inférieure de l'étrier. La surface supérieure de l'étrier est profilée pour couvrir le moins de surface possible des substrats verriers tout en permettant un maintien adéquat des substrats verriers.

L"étrier 90 est destiné à être fixé dans la gorge centrale 50 d'un profilé longitudinal 5. Pour cela, une pluralité d'ensembles comprenant la cale supérieure 96 + le lardon taraudé 94 + l'organe de maintien à distance 92 + les deuxièmes moyens de fixation 93 sont glissés le long des profilés longitudinaux dans la gorge centrale 50. Pour cela, les deuxièmes moyens de fixation 93 traversent, dans l'ordre, le lardon taraudé 94, la cale supérieure 96 et l'organe de maintien à distance 92. L'ensemble est alors disposé dans la gorge centrale 50 de telle façon que le lardon taraudé 94 soit entre le fond de la gorge centrale et les nervures 57, 58, que la cale supérieure 96 soit au dessus des nervures 57, 58 et que l'organe de maintien à distance 92 soit au dessus de la cale supérieure 96.

L'étrier 90 est ensuite positionné au-dessus de l'organe de maintien à distance 92, puis les premiers moyens de fixation 91 sont insérés dans les orifices des surfaces supérieure et inférieure de l'étrier et dans l'organe de maintien à distance 92. Par rotation des premiers moyens de fixation 91, les nervures 57, 58 sont prises en sandwich entre le lardon taraudé 94 et la cale supérieure 96 et les substrats verriers sont pris en sandwich dans l'étrier 90. Le fait de pouvoir prémonter les ensembles cale supérieure + lardon taraudé + organe de maintien à distance + deuxième organes de fixation permet de faciliter le travail des poseurs. Cela permet également de positionner correctement les pièces 9 de fixation qui peuvent coulisser sur les profilés longitudinaux jusqu'à la fixation de l'étrier 90. A part pour la première rangée de substrats verriers posés le long de la sablière 20, l'étrier 90 d'une pièce 9 de fixation en coin permet de fixer des substrats verriers supérieurs. L'organe de maintien à distance 92 permet alors de ne pas écraser le substrat verrier inférieur chevauché par le substrat verrier supérieur. L'organe de maintien à distance permet également de limiter les forces de serrage de ne pas écraser le substrat verrier supérieur présent dans l'étrier tout en permettant une fixation adéquate des substrats verriers sur les profilés longitudinaux.

Par ailleurs, l'étrier 90 est métallique. Aussi, pour éviter d'abîmer le verre des substrats, un revêtement de protection est prévu sur les faces internes de l'étrier destinées à être en contact avec les surfaces externes des substrats verriers. Ce revêtement de protection est en élastomère afin d'absorber les facteurs de flexion alternés créés par des rafales de vent, des vibrations ou des déformations de la toiture.

L'étrier 90 comprend en outre une patte 95 destinée à être introduite dans la gorge centrale 50 des profilés longitudinaux 5 jusque sous les nervures 57, 58 de façon à empêcher la rotation de l'étrier 90 lors de sa fixation sur l'organe de maintien à distance 92 au moyen des premiers moyens de fixation 91.

Le système de fixation et d'étanchéité comprend en outre des joints transversaux 7 adaptés à coopérer avec les barres transversales 6. La figure 6 montre plus en détail cette coopération.

Chaque joint transversal 7 comprend une partie 70 en forme de C de hauteur égale à la différence de hauteur entre les paliers inférieur 60 et supérieur 61 de chaque barre transversale 6 de façon à ce que la partie en forme de C puisse s'intercaler entre le palier inférieur 60 d'une barre transversale et un premier substrat verrier 4, et la partie 70 en forme de C étant destinée à accueillir le bord d'un deuxième substrat verrier 4. Ainsi, il y a un recouvrement des premier et deuxième substrats verriers 4. De préférence, la partie 70 en forme de C est surmontée de lèvres 73 destinées à absorber les déformations et flexions possibles des substrats verriers. De préférence, la partie en forme de C comprend des lèvres inclinées vers l'intérieur du C sur ses surfaces internes, ce qui permet de renforcer l'étanchéité du substrat verrier inférieur. De préférence également, la partie 70 en forme de C se prolonge, à son extrémité libre inférieure, par une gouttière 75 permettant de recueillir l'éventuelle eau d'infiltration pouvant apparaître par capillarité sur le chant du substrat verrier inférieur. La gouttière 75 peut se déverser dans les gorges latérales 51, 52 des profilés longitudinaux 5 situés à chaque extrémité du joint transversal 7.

Selon le mode de réalisation de la figure 6, qui est un mode de réalisation préféré, la partie 70 en forme de C comprend en outre un prolongement 71, optionnel, destiné à être disposé sur le palier supérieur 61 d'une barre transversale 6 de façon à s'intercaler entre le palier supérieur 61 de la barre transversale et le premier substrat verrier 4. De préférence, le prolongement 71 est surmonté de lèvres 74 destinées à absorber les déformations et flexions possibles des substrats verriers.

Dans les deux modes de réalisation (avec ou sans le prolongement 71), chaque joint transversal 7 comprend une gouttière 72, disposée sur le côté de la barre transversale 6 sur laquelle est posé le joint transversal 7. Cette gouttière 72 contribue à l'étanchéité transversale du système de fixation et d'étanchéité.

L'étanchéité à l'air et à l'eau entre deux substrats inférieur et supérieur est obtenue par les joints transversaux 7. Les joints transversaux 7 sont par exemple en EPDM, en silicone ou encore en élastomère TPE. De préférence, les joints transversaux sont co-extrudés. Les lèvres 73, 74 ont de préférence une dureté inférieure ou égale à 60 shore A pour donner de la souplesse au joint tandis que la partie 70 en forme de C, le prolongement 71 et la gouttière 72 ont de préférence une dureté supérieure ou égale à 65 shore A pour donner de la rigidité au système de fixation et d'étanchéité.

Le système de fixation et d'étanchéité comprend en outre des crochets 8 de maintien d'un substrat verrier dans la pente d'une charpente. Chaque crochet 8 est destiné à s'introduire dans une fente pratiquée dans le palier supérieur 61 d'une barre transversale 6 et, le cas échéant, dans une fente pratiquée dans le prolongement 71 d'un joint transversal 7. Le crochet 8 comprend une partie 80 en forme de C destinée à accueillir le bord d'un substrat verrier supérieur. Le crochet 8 comprend également une patte 81 de blocage destinée à rester insérée dans la barre transversale 6. De préférence, le crochet 8 comprend un système à baïonnette pour pouvoir être retiré aisément et ainsi permettre de remplacer facilement un module défaillant.

Le système de fixation et d'étanchéité comprend en outre des baguettes longitudinales de protection 17 destinées à être fixées le long des profilés longitudinaux 5 au moyen de pièces 10 de fixation longitudinale destinées à coopérer avec la gorge centrale 50 des profilés longitudinaux 5. Ces baguettes longitudinales de protection 17 peuvent ou non recouvrir les pièces 9 de fixation en coin. Elles participent à l'étanchéité et permettent surtout d'éviter le dépôt de corps étrangers, tels que poussières, feuilles, à l'intérieur de la gorge centrale 50 des profilés longitudinaux 5. Ces baguettes longitudinales de protection 17 sont par exemple en EPDM ou en élastomère TPE. En variante, elles peuvent être métalliques avec des joints latéraux adaptés à coopérer avec les chants des substrats verriers.

Chaque pièce 10 de fixation longitudinale est destinée à fixer simultanément les bords de deux substrats verriers 4 latéraux adjacents entre un profilé longitudinal 5 et une baguette longitudinale de protection 17. L'étanchéité longitudinale à l'air et à l'eau entre deux substrats verriers latéraux adjacents est obtenue grâce aux joints longitudinaux 15 et aux baguettes longitudinales de protection 17.

La figure 7 montre plus en détail les baguettes longitudinales de protection 17 et les pièces 10 de fixation longitudinale. Chaque pièce 10 de fixation longitudinale comprend un organe de maintien à distance 102, un lardon taraudé 104, une cale supérieure 106 et des premiers et deuxièmes moyens de fixation 101, 103. Chaque baguette longitudinale de protection 17 comprend en outre, sur sa surface inférieure, des pattes destinées à venir se placer de chaque côté de l'organe de maintien à distance 102.

Chaque baguette longitudinale de protection 17 est destinée à être fixée dans la gorge centrale 50 d'un profilé longitudinal 5. Pour cela, une pluralité d'ensembles comprenant la cale supérieure 106 + le lardon taraudé 104 + l'organe de maintien à distance 102 + les deuxièmes moyens de fixation 103 sont glissés le long des profilés longitudinaux dans la gorge centrale 50. Pour cela, les deuxièmes moyens de fixation 103 traversent, dans l'ordre, le lardon taraudé 104, la cale supérieure 106 et l'organe de maintien à distance 102. L'ensemble est alors disposé dans la gorge centrale 50 de telle façon que le lardon taraudé 104 soit entre le fond de la gorge centrale et les nervures 57, 58, que la cale supérieure 106 soit au dessus des nervures 57, 58 et que l'organe de maintien à distance 102 soit au dessus de la cale supérieure 106.

Deux substrats verriers latéraux adjacents 4 sont disposés sur un profilé longitudinal, fixés en leur coin inférieur par au moins une pièce 9 de fixation en coin. Une baguette longitudinale de protection 17 est ensuite positionnée sur lesdits deux substrats verriers latéraux adjacents et sur l'organe de maintien à distance 102, puis les premiers moyens de fixation 101 sont insérés dans les orifices des surfaces supérieure et inférieure de l'étrier et dans l'organe de maintien à distance 102. Par rotation des premiers moyens de fixation 101, les nervures 57, 58 sont prises en sandwich entre le lardon taraudé 104 et la cale supérieure 106 et les substrats verriers sont pris en sandwich entre la baguette longitudinale de protection 17 et les joints longitudinaux 15 sur lesquels ils sont en appui. Le fait de pouvoir prémonter les ensembles cale supérieure + lardon taraudé + organe de maintien à distance + deuxième organes de fixation permet de faciliter le travail des poseurs. Cela permet également de positionner correctement les pièces 10 de fixation longitudinale qui peuvent coulisser sur les profilés longitudinaux jusqu'à la fixation de la baguette longitudinale de protection 17. L'organe de maintien à distance 102 permet de limiter les forces de serrage afin de ne pas écraser les substrats verriers tout en permettant un maintien adéquat des substrats verriers sur les profilés longitudinaux.

Le système de fixation et d'étanchéité peut également comprendre une membrane 12 de protection. Cette membrane 12 de protection est par exemple un pare-vapeur. Elle est par exemple de type HPV (haute perméabilité à la vapeur), comme par exemple celle commercialisé par la société Sodimat, et/ou en structure multicouche. Elle permet de participer à l'étanchéité du système en reprenant la condensation éventuelle et en assurant une protection contre la poussière et la neige. Elle peut également servir (en structure multicouche) de protection contre d'éventuels bris des substrats verriers, par exemple si un arbre tombe sur la toiture en cas de tempête. La membrane 12 de protection est destinée à être tendue entre deux profilés longitudinaux 5 adjacents et à y être fixée au moyen d'organes d'encliquetage 11. Chaque organe d'encliquetage 11 est destiné à être encliqueté sur une extrémité libre 55, 56 d'une gorge latérale 51, 52 d'un profilé longitudinal 5, la membrane 12 de protection étant entre les extrémités libres 55, 56 et les organes d'encliquetage 11. La fixation des profilés 5 au moyen des équerres 16 se fait sans percement de la membrane 12 de protection, puisque les profilés longitudinaux 5 sont fixés avant la membrane, ce qui permet une étanchéité durable dans le temps.

Les figures 8, 9a et 9 montrent plus en détail les organes d'encliquetage 11 et la fixation de la membrane 12 de protection sur les profilés longitudinaux 5.

Les organes d'encliquetage 11 ont une forme complémentaire à celle des extrémités libres 55, 56 des gorges latérales 51, 52 des profilés longitudinaux 5, et se terminent à leur extrémité destinée à s'insérer sur les extrémités libres 55, 56 des gorges latérales 51, 52, par une nervure 110 en saillie destinée à être insérée sous les extrémités libres 55, 56 des gorges latérales 51, 52.

Les organes d'encliquetage 11 peuvent comprendre à leur autre extrémité, soit un retour à 90°, comme sur la figure 9a, pour aider à la mise en tension de la membrane, soit une patte 115, comme sur la figure 9b, comprenant un orifice pour le passage de câbles, utile en particulier lorsque le câblage des modules est réalisé en série de façon transversale.

Le système de fixation et d'étanchéité peut également comprendre un chariot muni de roulettes et adapté à coulisser dans les gorges latérales 51, 52 de deux profilés longitudinaux 5 adjacents. Le chariot est destiné à supporter des substrats verriers à poser sur des profilés longitudinaux 5. Ce chariot est une aide pour les poseurs. Il n'est utilisé que le temps de la pose et est retiré une fois la toiture terminée.

L'invention concerne également un toiture solaire comportant des substrats en verre 4 constituant des éléments de couverture de la toiture et au moins en partie des capteurs de l'énergie solaire, une charpente comprenant une sablière 20, une faîtière 21 et des panes 22, et un système de fixation et d'étanchéité selon l'invention, les substrats en verre 4 étant posés sur les profilés longitudinaux 5 et maintenus fermement grâce aux pièces de fixation en coin 9 et les profilés longitudinaux 5 étant fixés transversalement, et de préférence directement, à la charpente. Les substrats en verre 4 sont dépourvus de cadre support. Les substrats en verre font partie de dispositifs photovoltaïques et de capteurs thermiques à eau chaude et/ou à air chaud. La toiture peut comporter des moyens de convection forcée de flux d'air circulant sous les substrats en verre, notamment des extracteurs dont le débit est réglable sélectivement selon leur zone d'emplacement et/ou selon les conditions climatiques.

De plus, la toiture peut comporter des éléments fonctionnels du type absorbeurs, grilles de ventilation, volets d'isolation, qui peuvent être fixés aux profilés longitudinaux 5, par exemple via les extrémités libres 57, 58.

En particulier, une grille de ventilation peut avantageusement fournir une prise d'air : l'air peut s'engouffrer sous la toiture et, via une ventilation forcée au moyen d'extracteurs d'air agencés sous la toiture et à proximité du faîtage, cheminer sous la toiture, entre les profilés longitudinaux, jusqu'au faîtage. La convection forcée de flux d'air permet d'assurer une ventilation efficace des dispositifs photovoltaïques afin de ne pas les surchauffer, les dispositifs étant de préférence disposés vers le bas de la toiture. En outre, elle permet de fournir des capteurs à air chaud en combinaison avec les substrats verriers disposés en partie supérieure des dispositifs photovoltaïques et captant l'énergie solaire pour réchauffer cet air cheminant jusqu'aux extracteurs. L'air chaud récupéré est par exemple recyclé en alimentant des systèmes de pompes à chaleur ou d'échangeurs air-eau pour la production d'eau chaude basse température pour le chauffage domestique, y compris des systèmes de stockage saisonnier préférentiellement agencés dans le sol. La récupération d'air chaud se fait par exemple par un tubulaire rectangulaire qui s'insère entre les substrats verriers 4 et la sablière 20, la faîtière 21 ou les panes 22. Le tubulaire est percée d'une pluralité de trous, par exemple de diamètre d'environ 25 mm, permettant d'aspirer l'air chauffé par les substrats verriers. La pluralité de trous se rejoint en un trou unique, de diamètre plus important, d'où est extrait l'air chaud. Le débit des extracteurs d'air sera adapté en fonction de la zone géographique de l'habitation et du climat impliquant un ensoleillement plus ou moins fort. Le débit agira sur la vitesse du flux d'air qui pourra en outre être différent selon les zones d'extraction. La régulation des débits sera avantageusement obtenue grâce à des moyens de commande automatisée tels qu'un variateur de vitesse et des capteurs de température disposés dans les zones appropriées. De manière préférée, des dispositifs photovoltaïques sont donc disposés dans la partie inférieure de la toiture de manière à minimiser leur surchauffe qui abaisserait sinon leur rendement, tandis que des capteurs à eau chaude et à air chaud sont disposés en partie supérieure de la toiture, et même comme exprimé plus haut pour les capteurs à air chaud avec extracteurs, à proximité du faîtage, zone où la chaleur est la plus importante.

Les capteurs à eau chaude comprennent les substrats verriers de couverture et des absorbeurs dans lesquels circule un fluide caloporteur, les absorbeurs étant agencés sous la toiture et en regard et à proximité des substrats verriers. Selon l'invention, les profilés longitudinaux permettent très avantageusement de servir de moyens de support aux absorbeurs.

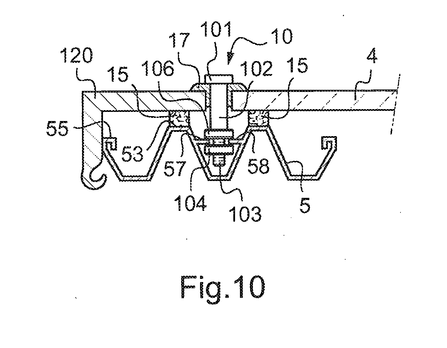

Sur le côté de la toiture (figure 10), l'étanchéité est par exemple effectuée par une pièce de rive ou un rabat 120, par exemple en zinc, comprenant deux parties. Une des partie est fixée par une pièce de fixation longitudinale 17 sur une surface de support 53, 54 d'un profilé longitudinal 5, avec intercalation d'un joint longitudinal 15 ou d'un tasseau en bois (non représenté), et l'autre partie est fixée, par exemple par une vis, sur une extrémité libre 55, 56 d'un profilé longitudinal 5. L'étanchéité du faîtage de la toiture est réalisée par un chapeau, par exemple en zinc, disposé à cheval sur la faîtière.

Les profilés longitudinaux s'adaptent aussi bien à une charpente en rénovation qu'à une charpente neuve. Il permet également de s'adapter à toutes largeurs de substrats verriers, par un positionnement libre sur la charpente. Il fournit par sa forme une inertie mécanique adaptée à une sécurisation et à une répartition des contraintes exercées par le poids des substrats. Enfin, le système de fixation et d'étanchéité est simple et rapide de mise en oeuvre (minimisant même les opérations de montage), et épuré fournissant un aspect extérieur à la toiture sobre et esthétique et exempt d'obstacles.

## Revendications

1. Système de fixation et d'étanchéité pour une toiture solaire comprenant des substrats verriers (4), le système de fixation et d'étanchéité comprenant :
- une pluralité de profilés longitudinaux (5) destinés à être positionnés parallèlement les uns aux autres, chaque profilé longitudinal (5) comprenant une gorge centrale (50) et deux gorges latérales (51, 52),
- des pièces (9) de fixation en coin destinées à coopérer avec la gorge centrale (50) des profilés longitudinaux (5), chaque pièce (9) de fixation en coin étant destinée à maintenir les coins de deux substrats verriers latéraux adjacents sur un même profilé longitudinal (5) et à les fixer simultanément, **caractérisé en ce que** le système de fixation et d'étanchéité comprend en outre, des barres transversales (6) perpendiculaires à la pluralité de profilés longitudinaux (5), chaque barre transversale (6) étant fixée à deux profilés longitudinaux adjacents et chaque barre transversale (6) comprenant une surface en escalier avec un palier inférieur (60) et un palier supérieur (61), le palier inférieur (60) étant destiné à supporter un substrat verrier inférieur et le palier supérieur (61) étant destiné à supporter un substrat verrier supérieur, le substrat verrier supérieur étant destiné à chevaucher le substrat verrier inférieur.

2. Système de fixation et d'étanchéité selon la revendication 1, dans lequel la gorge centrale (50) de chaque profilé longitudinal (5) comprend deux surfaces se faisant face, chacune de ces surfaces comportant une nervure (57, 58) en saillie de la surface, les nervures (57, 58) étant dans un même plan, parallèle au fond des gorges centrale (50) et latérales (51, 52), et dans lequel chaque pièce (9) de fixation en coin comprend un étrier (90) adapté à prendre en sandwich les tranches de deux substrats verriers (4) latéraux adjacents, l'étrier (90) étant destiné à être fixé dans la gorge centrale (50) d'un profilé longitudinal (5) au moyen de premiers moyens de fixation (91) traversant l'étrier et destinés à se fixer dans un organe de maintien à distance (92), l'organe de maintien à distance (92) étant adapté à coopérer avec des deuxièmes moyens de fixation (93) traversant un lardon taraudé (94), disposée dans la gorge centrale (50) entre le fond de la gorge centrale et les nervures (57, 58), et une cale supérieure (96), les nervures (57, 58) étant destinées à être prises en sandwich entre le lardon taraudé (94) et la cale supérieure (96) lors de la fixation des deuxièmes moyens de fixation (93) dans l'organe de maintien à distance (92).

3. Système de fixation et d'étanchéité selon la revendication 2, dans lequel l'étrier (90) a une section en forme de C avec une surface supérieure et une surface inférieure reliées par un fond et permettant de retenir les substrats verriers dans la pente d'une charpente, la surface supérieure de l'étrier étant profilée pour couvrir le moins de surface possible des substrats verriers.

4. Système de fixation et d'étanchéité selon la revendication 3, dans lequel l'étrier comprend en outre une patte (95) destinée à être introduite dans la gorge centrale (50) jusque sous les nervures (57, 58) de façon à empêcher la rotation de l'étrier (90) lors de sa fixation sur l'organe de maintien à distance (92) au moyen des premiers moyens de fixation (91).

5. Système de fixation et d'étanchéité selon l'une des revendications 1 à 4, comprenant en outre des joints longitudinaux (15) destinés à être fixés sur les surfaces de support (53, 54) des profilés longitudinaux (5).

6. Système de fixation et d'étanchéité selon l'une des revendications 1 à 5, comprenant en outre des joints transversaux (7), chaque joint transversal (7) comprenant une partie (70) en forme de C de hauteur égale à la différence de hauteur entre les paliers inférieur (60) et supérieur (61) de chaque barre transversale (6) de façon à ce que la partie en forme de C puisse s'intercaler entre le palier inférieur (60) d'une barre transversale et un premier substrat verrier (4), et la partie (70) en forme de C étant destinée à accueillir un deuxième substrat verrier (4) de façon à ce qu'il y ait un recouvrement des premier et deuxième substrats verriers (4).

7. Système de fixation et d'étanchéité selon la revendication 6, dans lequel chaque joint transversal (7) comprend en outre un prolongement (71) destiné à être disposé sur le palier supérieur (61) d'une barre transversale (6) de façon à s'intercaler entre le palier supérieur (61) de la barre transversale et le premier substrat verrier (4).

8. Système de fixation et d'étanchéité selon l'une des revendications 1 à 5, comprenant en outre des crochets (8) de maintien d'un substrat verrier dans la pente d'une charpente, chaque crochet (8) étant destiné à s'introduire dans une fente pratiquée dans le palier supérieur (61) de chaque barre transversale (6).

9. Système de fixation et d'étanchéité selon la revendication 7, comprenant en outre des crochets (8) de maintien d'un substrat verrier dans la pente d'une charpente, chaque crochet (8) étant destiné à s'introduire dans une fente pratiquée dans le palier supérieur (61) de chaque barre transversale (6) et dans le prolongement (71) de chaque joint transversal (7).

10. Système de fixation et d'étanchéité selon l'une des revendications 1 à 9, comprenant en outre des baguettes longitudinales de protection (17) destinées à être fixées le long des profilés longitudinaux (5) au moyen de pièces (10) de fixation longitudinale destinées à coopérer avec la gorge centrale (50) des profilés longitudinaux (5), chaque pièce (10) de fixation longitudinale étant destinée à fixer simultanément les bords de deux substrats verriers (4) latéraux adjacents entre un profilé longitudinal (5) et une baguette longitudinale de protection (17).

11. Système de fixation et d'étanchéité selon la revendication 10, chaque pièce (10) de fixation longitudinale comprend des premiers moyens de fixation (101) traversant une baguette longitudinale de protection (17) et destinés à se fixer dans un organe de maintien à distance (102), l'organe de maintien à distance (102) étant adapté à coopérer avec des deuxièmes moyens de fixation (103) traversant un lardon taraudé (104), disposée dans la gorge centrale (50) entre le fond de la gorge centrale et les nervures (57, 58), et une cale supérieure (106), les nervures (57, 58) étant destinées à être prises en sandwich entre le lardon taraudé (104) et la cale supérieure (106) lors de la fixation des deuxièmes moyens de fixation (93) dans l'organe de maintien à distance (92).

12. Système de fixation et d'étanchéité selon l'une quelconque des revendications 1 à 11, dans lequel les profilés longitudinaux (5) sont en acier, de préférence en acier galvanisé.

13. Système de fixation et d'étanchéité selon l'une des revendications 1 à 12, comprenant en outre une membrane (12) de protection destinée à être tendue entre deux profilés longitudinaux (5) adjacents au moyen d'organes d'encliquetage (11), chaque organe d'encliquetage (11) étant destiné à être encliqueté sur une extrémité libre (55, 56) d'une gorge latérale (51, 52) d'un profilé longitudinal (5).

14. Système de fixation et d'étanchéité selon l'une des revendications 1 à 13, comprenant en outre un chariot muni de roulettes coulissant dans les gorges latérales (51, 52) de deux profilés longitudinaux (5) adjacents, le chariot étant destiné à supporter des substrats verriers à poser sur des profilés longitudinaux (5).

15. Toiture solaire comportant des substrats en verre (4) constituant des éléments de couverture de la toiture et au moins en partie des capteurs de l'énergie solaire, une charpente comprenant une sablière (20), une faîtière (21) et des panes (22), et un système de fixation et d'étanchéité selon l'une quelconque des revendications 1 à 13, les substrats en verre (4) étant posés sur les profilés longitudinaux (5) et maintenus fermement grâce aux pièces de fixation en coin (9) et les profilés longitudinaux (5) étant fixés transversalement, et de préférence directement, à la charpente.

16. Toiture selon la revendication 15, **caractérisée en ce que** les substrats en verre (4) sont dépourvus de cadre support.

## Patentansprüche

1. Befestigungs- und Dichtungssystem für ein Solardach mit Glassubstraten (4), wobei das Befestigungs- und Dichtungssystem umfasst:
- eine Vielzahl von Längsprofilen (5), die dazu bestimmt sind, parallel zueinander positioniert zu werden, wobei jedes Längsprofil (5) eine mittlere Auskehlung (50) und zwei seitliche Auskehlungen (51, 52) umfasst,
- Eckbefestigungsteile (9), die dazu bestimmt sind, mit der mittleren Auskehlung (50) der Längsprofile (5) zusammenzuwirken, wobei jedes Eckbefestigungsteil (9) dazu bestimmt ist, die Ecken von zwei benachbarten seitlichen Glassubstraten an einem gleichen Längsprofil (5) zu halten und sie gleichzeitig zu befestigen,
**dadurch gekennzeichnet, dass** das Befestigungs- und Dichtungssystem ferner Querstangen (6), die zu der Vielzahl von Längsprofilen (5) senkrecht verlaufen, umfasst, wobei jede Querstange (6) an zwei benachbarten Längsprofilen befestigt ist und wobei jede Querstange (6) eine treppenförmige Fläche mit einem unteren Treppenabsatz (60) und einem oberen Treppenabsatz (61) umfasst, wobei der untere Treppenabsatz (60) dazu bestimmt ist, ein unteres Glassubstrat zu tragen und wobei der obere Treppenabsatz (61) dazu bestimmt ist, ein oberes Glassubstrat zu tragen, wobei das obere Glassubstrat dazu bestimmt ist, das untere Glassubstrat zu überlappen.

2. Befestigungs- und Dichtungssystem nach Anspruch 1, wobei die mittlere Auskehlung (50) eines jeden Längsprofils (5) zwei einander gegenüberliegende Flächen umfasst, wobei jede dieser Flächen eine von der Fläche vorspringende Rippe (57, 58) umfasst, wobei die Rippen (57, 58) in einer gleichen Ebene parallel zum Grund der mittleren (50) und seitlichen (51, 52) Auskehlungen liegen, und wobei jedes Eckbefestigungsteil (9) einen Bügel (90) umfasst, der dazu ausgelegt ist, die Kanten von zwei benachbarten seitlichen Glassubstraten (4) sandwichartig anzuordnen, wobei der Bügel (90) dazu bestimmt ist, in der mittleren Auskehlung (50) eines Längsprofils (5) mittels erster Befestigungsmittel (91), welche den Bügel durchgreifen und dazu bestimmt sind, in einem Organ zum Halten auf Abstand (92) festgelegt zu werden, befestigt zu werden, wobei das Abstandhalteorgan (92) dazu ausgelegt ist, mit zweiten Befestigungsmitteln (93) zusammenzuwirken, welche einen innengewindeten Nutenstein (94), der in der mittleren Auskehlung (50) zwischen dem Grund der mittleren Auskehlung und den Rippen (57, 58) angeordnet ist, sowie einen oberen Keil (96) durchgreifen, wobei die Rippen (57, 58) dazu bestimmt sind, zwischen dem innengewindeten Nutenstein (94) und dem oberen Keil (96) bei der Befestigung der zweiten Befestigungsmittel (93) in dem Abstandhalteorgan (92) sandwichartig angeordnet zu werden.

3. Befestigungs- und Dichtungssystem nach Anspruch 2, wobei der Bügel (90) einen C-förmigen Querschnitt mit einer oberen Fläche und einer unteren Fläche aufweist, die durch einen Boden verbunden sind und ermöglichen, die Glassubstrate in der Neigung eines Dachgebälks zu halten, wobei die obere Fläche des Bügels profiliert ist, um möglichst wenig Fläche der Glassubstrate zu bedecken.

4. Befestigungs- und Dichtungssystem nach Anspruch 3, wobei der Bügel ferner eine Lasche (95) umfasst, die dazu bestimmt ist, in die mittlere Auskehlung (50) bis unter die Rippen (57, 58) eingeführt zu werden, um das Drehen des Bügels (90) bei seiner Befestigung an dem Abstandhalteorgan (92) mittels der ersten Befestigungsmittel (91) zu verhindern.

5. Befestigungs- und Dichtungssystem nach einem der Ansprüche 1 bis 4, ferner umfassend Längsdichtungen (15), die dazu bestimmt sind, an den Tragflächen (53, 54) der Längsprofile (5) befestigt zu werden.

6. Befestigungs- und Dichtungssystem nach einem der Ansprüche 1 bis 5, ferner umfassend Querdichtungen (7), wobei jede Querdichtung (7) einen C-förmigen Teil (70) mit einer Höhe, die gleich der Höhendifferenz zwischen dem unteren (60) und dem oberen (61) Treppenabsatz einer jeden Querstange (6) ist, umfasst, so dass der C-förmige Teil sich zwischen dem unteren Treppenabsatz (60) einer Querstange und einem ersten Glassubstrat (4) einfügen kann, und wobei der C-förmige Teil (70) dazu bestimmt ist, ein zweites Glassubstrat (4) aufzunehmen, so dass eine Überlappung des ersten und des zweiten Glassubstrats (4) vorliegt.

7. Befestigungs- und Dichtungssystem nach Anspruch 6, wobei jede Querdichtung (7) ferner eine Verlängerung (71) umfasst, die dazu bestimmt ist, auf dem oberen Treppenabsatz (61) einer Querstange (6) angeordnet zu werden, um sich zwisehen dem oberen Treppenabsatz (61) der Querstange und dem ersten Glassubstrat (4) einzufügen.

8. Befestigungs- und Dichtungssystem nach einem der Ansprüche 1 bis 5, ferner umfassend Haken (8) zum Halten eines Glassubstrats in der Neigung eines Dachgebälks, wobei jeder Haken (8) dazu bestimmt ist, in einen in dem oberen Treppenabsatz (61) einer jeden Querstange (6) ausgebildeten Schlitz eingeführt zu werden.

9. Befestigungs- und Dichtungssystem nach Anspruch 7, ferner umfassend Haken (8) zum Halten eines Glassubstrats in der Neigung eines Dachgebälks, wobei jeder Haken (8) dazu bestimmt ist, in einen Schlitz, welcher in dem oberen Treppenabsatz (61) einer jeden Querstange (6) und in der Verlängerung (71) einer jeden Querdichtung (7) ausgebildet ist, eingeführt zu werden.

10. Befestigungs- und Dichtungssystem nach einem der Ansprüche 1 bis 9, ferner umfassend Schutzlängsleisten (17), die dazu bestimmt sind, entlang der Längsprofile (5) mittels Teilen (10) zur Längsbefestigung, welche dazu bestimmt sind, mit der mittleren Auskehlung (50) der Längsprofile (50) zusammenzuwirken, befestigt zu werden, wobei jedes Längsbefestigungsteil (10) dazu bestimmt ist, die Kanten von zwei benachbarten seitlichen Glassubstraten (4) zwischen einem Längsprofil (5) und einer Schutzlängsleiste (17) gleichzeitig zu befestigen.

11. Befestigungs- und Dichtungssystem nach Anspruch 10, wobei jedes Längsbefestigungsteil (10) erste Befestigungsmittel (101) umfasst, die eine Schutzlängsleiste (17) durchgreifen und dazu bestimmt sind, in einem Abstandhalteorgan (102) festgelegt zu werden, wobei das Abstandhalteorgan (102) dazu ausgelegt ist, mit zweiten Befestigungsmitteln (103) zusammenzuwirken, die einen innengewindeten Nutenstein (104), welcher in der mittleren Auskehlung (50) zwischen dem Grund der mittleren Auskehlung und den Rippen (57, 58) angeordnet ist, sowie einen oberen Keil (106) durchgreifen, wobei die Rippen (57, 58) dazu bestimmt sind, zwischen dem innengewindeten Nutenstein (104) und dem oberen Keil (106) bei der Befestigung der zweiten Befestigungsmittel (93) in dem Abstandhalteorgan (92) sandwichartig angeordnet zu werden.

12. Befestigungs- und Dichtungssystem nach einem der Ansprüche 1 bis 11, wobei die Längsprofile (5) aus Stahl, vorzugsweise aus galvanisiertem Stahl bestehen.

13. Befestigungs- und Dichtungssystem nach einem der Ansprüche 1 bis 12, ferner umfassend eine Schutzmembran (12), die dazu bestimmt ist, mittels Rastorganen (11) zwischen zwei benachbarte Längsprofile (5) gespannt zu werden, wobei jedes Rastorgan (11) dazu bestimmt ist, an einem freien Ende (55, 56) einer seitlichen Auskehlung (51, 52) eines Längsprofils (5) verrastet zu werden.

14. Befestigungs- und Dichtungssystem nach einem der Ansprüche 1 bis 13, ferner umfassend einen mit Rollen versehenen Schlitten, der in den seitlichen Auskehlungen (51, 52) von zwei benachbarten Längsprofilen (5) verschieblich ist, wobei der Schlitten dazu bestimmt ist, auf Längsprofilen (5) zu verlegende Glassubstrate zu tragen.

15. Solardach, umfassend Glassubstrate (4), die Elemente zum Decken des Daches und wenigstens teilweise Sonnenenergie-Sensoren bilden, ein Dachgebälk mit einer Fußpfette (20), einer Firstbohle (21) und Dachpfetten (22), sowie ein Befestigungsund Dichtungssystem nach einem der Ansprüche 1 bis 13, wobei die Glassubstrate (4) auf den Längsprofilen (5) verlegt und mit Hilfe der Eckbefestigungsteile (9) fest gehalten sind und wobei die Längsprofile (5) quer, und vorzugsweise direkt, an dem Dachgebälk befestigt sind.

16. Dach nach Anspruch 15, **dadurch gekennzeichnet, dass** die Glassubstrate (4) keinen Tragrahmen aufweisen.

## Claims

1. A fixing and sealing system for a solar roof comprising glass substrates (4), the fixing and sealing system comprising:
- a plurality of longitudinal profiles (5) designed to be positioned in parallel with one another, each longitudinal profile (5) comprising a central groove (50) and two lateral grooves (51, 52),
- corner fixing parts (9) designed to cooperate with the central groove (50) of the longitudinal profiles (5), each corner fixing part (9) being designed to hold the corners of two adjacent lateral glass substrates on the same longitudinal profile (5) and to fix said adjacent lateral glass substrates simultaneously,
**characterised in that** the fixing and sealing system further comprises transverse bars (6) perpendicular to the plurality of longitudinal profiles (5), each transverse bar (6) being fixed to two adjacent longitudinal profiles and each transverse bar (6) comprising a stepped surface with a lower bearing (60) and an upper bearing (61), the lower bearing (60) being designed to support a lower glass substrate and the upper bearing (61) being designed to support an upper glass substrate, the upper glass substrate being designed to overlap the lower glass substrate.

2. The fixing and sealing system as claimed in claim 1, in which the central groove (50) of each longitudinal profile (5) comprises two surfaces facing one another, each of said surfaces comprising a rib (57, 58) protruding from the surface, the ribs (57, 58) being in the same plane, parallel to the base of the central (50) and lateral (51, 52) grooves and in which each corner fixing part (9) comprises a C-shaped piece (90) capable of sandwiching the portions of two adjacent lateral glass substrates (4), the C-shaped piece (90) being designed to be fixed in the central groove (50) of a longitudinal profile (5) by means of first fixing means (91) passing through the C-shaped piece and designed to be fixed in a spacing member (92), the spacing member (92) being capable of cooperating with second fixing means (93) passing through a threaded gib (94) arranged in the central groove (50) between the base of the central groove and the ribs (57, 58) and an upper wedge (96), the ribs (57, 58) being designed to be sandwiched between the threaded gib (94) and the upper wedge (96) when fixing the second fixing means (93) in the spacing member (92).

3. The fixing and sealing system as claimed in claim 2, in which the C-shaped piece (90) has a C-shaped section with an upper surface and a lower surface connected by a base and permitting the glass substrates to be retained on the slope of a roof structure, the upper surface of the C-shaped piece being profiled to cover the smallest possible surface area of the glass substrates.

4. The fixing and sealing system as claimed in claim 3, in which the C-shaped piece further comprises a leg (95) designed to be introduced into the central groove (50) as far as below the ribs (57, 58) so as to prevent the rotation of the C-shaped piece (90) when fixed to the spacing member (92) by means of the first fixing means (91).

5. The fixing and sealing system as claimed in one of claims 1 to 4, further comprising longitudinal seals (15) designed to be fixed to the support surfaces (53, 54) of the longitudinal profiles (5).

6. The fixing and sealing system as claimed in one of claims 1 to 5, further comprising transverse seals (7), each transverse seal (7) comprising a C-shaped part (70) of a height equal to the difference in height between the lower (60) and upper (61) bearings of each transverse bar (6) so that the C-shaped part may be wedged between the lower bearing (60) of a transverse bar and a first glass substrate (4) and the C-shaped part (70) being designed to receive a second glass substrate (4) so that the first and second glass substrates (4) overlap.

7. The fixing and sealing system as claimed in claim 6, in which each transverse seal (7) further comprises an extension (71) designed to be arranged on the upper bearing (61) of a transverse bar (6) so as to be wedged between the upper bearing (61) of the transverse bar and the first glass substrate (4).

8. The fixing and sealing system as claimed in one of claims 1 to 5, further comprising hooks (8) for holding a glass substrate on the slope of a roof structure, each hook (8) being designed to be introduced into a slot formed in the upper bearing (61) of each transverse bar (6).

9. The fixing and sealing system as claimed in claim 7, further comprising hooks (8) for holding a glass substrate on the slope of a roof structure, each hook (8) being designed to be introduced into a slot formed in the upper bearing (61) of each transverse bar (6) and in the extension (71) of each transverse seal (7).

10. The fixing and sealing system as claimed in one of claims 1 to 9, further comprising longitudinal protective bars (17) designed to be fixed along the longitudinal profiles (5) by means of longitudinal fixing parts (10) designed to cooperate with the central groove (50) of the longitudinal profiles (5), each longitudinal fixing part (10) being designed to fix simultaneously the edges of two adjacent lateral glass substrates (4) between a longitudinal profile (5) and a longitudinal protective bar (17).

11. The fixing and sealing system as claimed in claim 10, each longitudinal fixing part (10) comprising first fixing means (101) passing through a longitudinal protective bar (17) and designed to be fixed in a spacing member (102), the spacing member (102) being capable of cooperating with second fixing means (103) passing through a threaded gib (104) arranged in the central groove (50) between the base of the central groove and the ribs (57, 58), and an upper wedge (106), the ribs (57, 58) being designed to be sandwiched between the threaded gib (104) and the upper wedge (106) when fixing the second fixing means (93) in the spacing member (92).

12. The fixing and sealing system as claimed in any one of claims 1 to 11, in which the longitudinal profiles (5) are made of steel, preferably galvanized steel.

13. The fixing and sealing system as claimed in one of claims 1 to 12, further comprising a protective membrane (12) designed to be held between two adjacent longitudinal profiles (5) by means of clipping members (11), each clipping member (11) being designed to be clipped to one free end (55, 56) of a lateral groove (51, 52) of a longitudinal profile (5).

14. The fixing and sealing system as claimed in one of claims 1 to 13, further comprising a carriage provided with wheels sliding in the lateral grooves (51, 52) of two adjacent longitudinal profiles (5), the carriage being designed to support glass substrates to be placed on longitudinal profiles (5).

15. A solar roof comprising glass substrates (4) forming elements for covering the roof and at least partially solar energy collectors, a roof structure comprising a wall plate (20), a ridge (21) and purlins (22) and a fixing and sealing system as claimed in any one of claims 1 to 13, the glass substrates (4) being placed on longitudinal profiles (5) and held firmly by means of corner fixing parts (9) and longitudinal profiles (5) being fixed transversely and preferably directly to the roof structure.

16. The roof as claimed in claim 15, **characterized in that** the glass substrates (4) do not have a support frame.
